# EUROPEAN PATENT APPLICATION

(11) **EP 4 826 109 A1**
(43) Date of publication of application: **21.10.2026**
(21) Application number: 24904370.4
(22) Date of filing: 11.12.2024
(51) Int. Cl.: C23C 2/06, C23C 2/02, C23C 2/40, B21B 1/22, B21B 3/02, C22C 38/02, C22C 38/04, C22C 38/06, C22C 38/00

(54) **HOT-DIP GALVANIZED STEEL SHEET AND METHOD OF MANUFACTURING SAME**

(30) Priority: 15.12.2023 KR 20230183828
(71) Applicant: POSCO Co., Ltd, Gyeongsangbuk-do 37859 (KR)
(72) Inventor: KIM, Young-Ha, Gwangyang-si, Jeollanam-do 57807 (KR); KWON, Seong-Choon, Gwangyang-si, Jeollanam-do 57807 (KR); KANG, Dae-Young, Gwangyang-si, Jeollanam-do 57807 (KR); KIM, Sung-Won, Gwangyang-si, Jeollanam-do 57807 (KR)
(74) Representative: Meissner Bolte Partnerschaft mbB
(86) International application number: PCT/KR2024/096716
(87) International publication number: WO 2025/127805

(57) **Abstract**

One aspect of the present invention is to provide a hot-dip galvanized steel sheet and a method of manufacturing same. One preferred aspect of the present invention is to provide a high-strength hot-dip galvanized steel sheet having excellent plated appearance and plating adhesiveness, and a manufacturing method therefor.

## Description

### Technical Field

The present disclosure relates to a hot-dip galvanized steel sheet and a method of manufacturing the same.

### Background Art

According to environmental regulations which have recently emerged, demand for an ultra-high-strength steel sheet is surging as a measure to respond to strict automobile fuel efficiency regulations and strengthening crash safety regulations. While fuel efficiency improvement is required to achieve national carbon emission reduction targets, vehicle weight is continuously increasing due to increased levels of performance and an increase in various convenience devices. In order to solve the problem, a demand for an ultra-high-strength steel sheet is continuously increasing, and thus, steel companies are focusing on development of a high-strength steel sheet such as Dual Phase (DP) steel, Transformation Induced Plasticity (TRIP) steel, and Complex Phase (CP) steel.

For higher strength of an automotive steel sheet, it is common to add elements such as Si, Mn, and Al to steel, but these elements produce oxides on the surface of the steel sheet in an annealing heat treatment process, thereby deteriorating platability and adhesiveness during hot-dip galvanizing.

A representative technology for solving the problem is Patent Document 1. Patent Document 1 relates to a technology of performing reduction annealing of a steel sheet containing large amounts of Si and Al for improving plating quality at an air-fuel ratio of 0.7 to 1.2, using a direct flame reduction heating method furnace, in order to improve plating quality. The document discloses that through the technology, a Fe oxide on a surface layer of a steel sheet is reduced into reduced Fe, and a Fe-Al intermetallic compound layer may be developed well to secure an excellent plating surface. However, the Fe oxide and an oxide of Si, Mn, or Al formed at an interface of a base steel sheet are in a layer form in a reduction annealing process to cause a plating peeling phenomenon in which a plating layer is detached after galvanizing.

Therefore, it is a time when a demand for technology capable of securing plated appearance and plating adhesiveness of a high-strength hot-dip galvanized steel sheet is very urgent.

### [Related Art Document]

(Patent Document 1) Japanese Patent Laid-Open Publication No. 2005-154856

### Summary of Invention

### Technical Problem

An aspect of the present disclosure is to provide a hot-dip galvanized steel sheet and a method of manufacturing the same.

One preferred aspect of the present disclosure is to provide a high-strength hot-dip galvanized steel sheet having excellent plated appearance and plating adhesiveness, and a manufacturing method therefor.

### Solution to Problem

According to an aspect of the present disclosure, a hot-dip galvanized steel sheet includes: a cold-rolled steel sheet including, by weight: 0.10% or more and less than 0.50% of Si, 1.0 to 3.0% of Mn, a remainder of Fe, and other unavoidable impurities; and a hot-dip galvanized plating layer formed on at least one surface of the cold-rolled steel sheet, wherein a Fe-Al intermetallic compound layer is formed at an interface between the cold-rolled steel sheet and the hot-dip galvanized plating layer, a Fe reduction layer having an average thickness of 50 to 250 nm is formed directly below a surface of the cold-rolled steel sheet, and an internal oxide layer is formed directly below the Fe reduction layer.

According to another aspect of the present disclosure, a hot-dip galvanized steel sheet includes: a cold-rolled steel sheet including, by weight: 0.10% or more and less than 0.50% of Si, 1.0 to 3.0% of Mn, a remainder of Fe, and other unavoidable impurities; and a hot-dip galvanized plating layer formed on at least one surface of the cold-rolled steel sheet, wherein a Fe-Al intermetallic compound layer having pores is formed at an interface between the cold-rolled steel sheet and the hot-dip galvanized plating layer, a Fe reduction layer having an average thickness of 50 to 250 nm is formed directly below a surface of the cold-rolled steel sheet, and the pores have an area ratio of 10% or less of a total surface area of the hot-dip galvanized steel sheet.

The cold-rolled steel sheet may further include, by weight: one or more of 0.050 to 0.30% of C, 0.10% or less (excluding 0%) of P, 0.010% or less (excluding 0%) of S, 0.010 to 0.10% of Al, and 0.0080% or less (excluding 0%) of N.

The Fe-Al intermetallic compound layer may have an area ratio of 90% or more of the total surface area of the hot-dip galvanized steel sheet.

The Fe reduction layer may have a grain form.

The internal oxide layer may have an average thickness of 0.5 to 3 µm.

According to another aspect of the present disclosure, a method of manufacturing a hot-dip galvanized steel sheet includes: heating a slab including, by weight: 0.10% or more and less than 0.50% of Si, 1.0 to 3.0% of Mn, a remainder of Fe, and other unavoidable impurities; finish hot rolling the heated slab to obtain a hot-rolled steel sheet; winding the hot-rolled steel sheet at 600 to 680°C; cold rolling the wound hot-rolled steel sheet to obtain a cold-rolled steel sheet; passing the cold-rolled steel sheet through direct fired furnace (DFF) equipment to perform an oxidative heat treatment so that an exit side temperature is 630 to 670°C; reductive heat-treating the oxidative heat-treated cold-rolled steel sheet in a reducing atmosphere having a dew point temperature of -60°C or higher and lower than -45°C; and hot-dip galvanizing the reductive heat-treated cold-rolled steel sheet to obtain a hot-dip galvanized steel sheet, wherein the DFF equipment includes 4 or more zones and is controlled to satisfy the following Relation 1: [Relation 1] 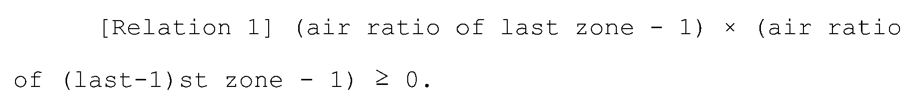 (air ratio of last zone - 1) × (air ratio of (last-1)st zone - 1) ≥ 0.

The slab may further include one or more of 0.050 to 0.30% of C, 0.10% or less (excluding 0%) of P, 0.010% or less (excluding 0%) of S, 0.010 to 0.10% of Al, and 0.0080% or less (excluding 0%) of N.

The heating of the slab may be performed at 1100 to 1300°C.

The finish hot rolling may be performed at 800 to 1000°C.

The reducing atmosphere may include, by volume: 3 to 25% of hydrogen and a remainder of nitrogen.

The 4 or more zones may have an air ratio of 1.0 or more, respectively.

### Advantageous Effects of Invention

According to an aspect of the present disclosure, a hot-dip galvanized steel sheet and a method of manufacturing the same may be provided.

According to a preferred aspect of the present disclosure, a high-strength hot-dip galvanized steel sheet having excellent plated appearance and plating adhesiveness and a method of manufacturing the same may be provided.

### Brief Description of Drawings

FIG. 1 is a schematic diagram showing a hot-dip galvanized steel sheet according to an embodiment of the present disclosure.
FIG. 2 is a photograph in which Inventive Example 1 according to an example embodiment in the present disclosure was observed with TEM.
FIG. 3 is a photograph in which Comparative Example 1 deviating from an example embodiment in the present disclosure was observed with TEM.
FIG. 4 is a photograph in which a surface of a Fe-Al intermetallic compound layer of Inventive Example 1 according to an example embodiment in the present disclosure was observed with SEM.
FIG. 5 is a photograph in which a surface of a Fe-Al intermetallic compound layer of Comparative Example 1 deviating from an example embodiment in the present disclosure was observed with SEM.

### Best Mode for Invention

Hereinafter, a hot-dip galvanized steel sheet according to an embodiment of the present disclosure will be described.

The hot-dip galvanized steel sheet according to an embodiment of the present disclosure includes: a cold-rolled steel sheet including, by weight: 0.10% or more and less than 0.50% of Si, 1.0 to 3.0% of Mn, a remainder of Fe, and other unavoidable impurities; and a hot-dip galvanized plating layer formed on at least one surface of the cold-rolled steel sheet, wherein a Fe-Al intermetallic compound layer is formed at an interface between the cold-rolled steel sheet and the hot-dip galvanized plating layer, a Fe reduction layer having an average thickness of 50 to 250 nm is formed directly below a surface of the cold-rolled steel sheet, and an internal oxide layer is formed directly below the Fe reduction layer.

Another embodiment of the present disclosure provides a hot-dip galvanized steel sheet including: a cold-rolled steel sheet including, by weight: 0.10% or more and less than 0.50% of Si, 1.0 to 3.0% of Mn, a remainder of Fe, and other unavoidable impurities; and a hot-dip galvanized plating layer formed on at least one surface of the cold-rolled steel sheet, wherein a Fe-Al intermetallic compound layer having pores is formed at an interface between the cold-rolled steel sheet and the hot-dip galvanized plating layer, a Fe reduction layer having an average thickness of 50 to 250 nm is formed directly below a surface of the cold-rolled steel sheet, and the pores have an area ratio of 10% or less of a total surface area of the hot-dip galvanized steel sheet.

It is preferred that the cold-rolled steel sheet of the present disclosure includes, by weight: 0.10% or more and less than 0.50% of Si, 1.0 to 3.0% of Mn, a remainder of Fe, and other unavoidable impurities.

### Si: 0.10% or more and less than 0.50%

Si is an important element contributing to strength improvement by solid solution strengthening and serves to improve strength while suppressing workability deterioration. When the content of Si is less than 0.10%, it is difficult to sufficiently obtain the effect described above. When the content of Si is 0.50% or more, a Si or Mn oxide in a layer form may be formed directly below the Fe reduction layer during an oxidative heat treatment to lower plating adhesiveness. Therefore, it is preferred that the Si content is in a range of 0.10% or more and less than 0.50%. The lower limit of the Si content is more preferably 0.12%, and still more preferably 0.15%. The upper limit of the Si content is more preferably 0.45%, and still more preferably 0.4%.

### Mn: 1.0 to 3.0%

Mn is an element which contributes to strength improvement by solid solution strengthening and simultaneously improves quenchability of an austenite phase and effectively contributes to the stabilization of strength. When the content of Mn is less than 1.0%, it is difficult to sufficiently obtain the effect described above. When the content of Mn is more than 3.0%, workability may be deteriorated. Therefore, it is preferred that the Mn content is in a range of 1.0 to 3.0%. The lower limit of the Mn content is more preferably 1.50%. The upper limit of the Mn content is more preferably 2.50%.

Other alloy compositions than Si and Mn of the cold-rolled steel sheet of the present disclosure are not particularly defined, and all alloy compositions of the cold-rolled steel sheet used in the art may be applied. However, as an example, the cold-rolled steel sheet of the present disclosure may further include, by weight: one or more of 0.050 to 0.30% of C, 0.10% or less (excluding 0%) of P, 0.010% or less (excluding 0%) of S, 0.010 to 0.10% of Al, 0.0080% or less (excluding 0%) of N.

The remaining component of the cold-rolled steel sheet of the present disclosure is iron (Fe), and a part of unintended unavoidable impurities incorporated during a manufacturing process may be included. Since these impurities are known to any person skilled in the common manufacturing process, the entire description thereof is not particularly mentioned in the present specification.

Meanwhile, the cold-rolled steel sheet of the present disclosure may have a thickness of 1.0 to 2.5 mm, and thus, may be preferably used as an automotive steel sheet for an impact structural member.

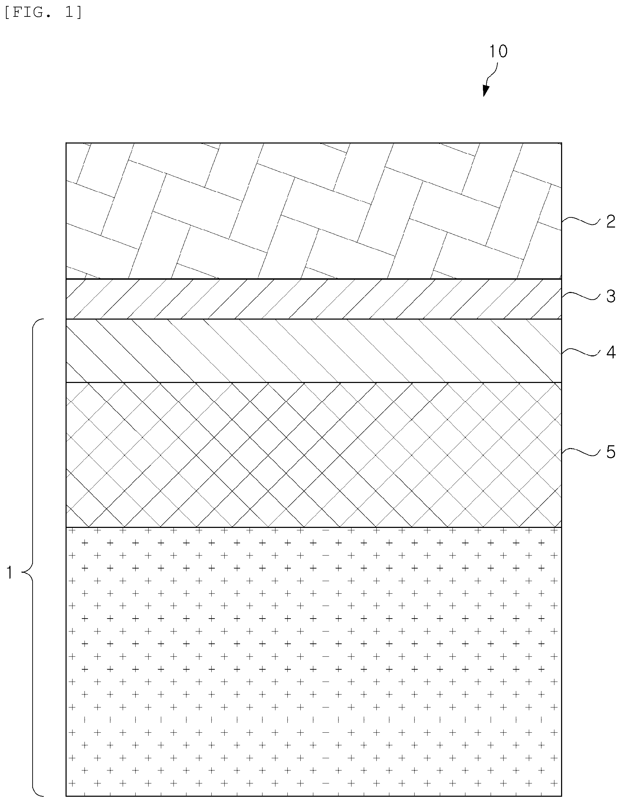

FIG. 1 is a schematic diagram showing a hot-dip galvanized steel sheet according to an embodiment of the present disclosure.

It is preferred that the hot-dip galvanized steel sheet 10 of the present disclosure includes a hot-dip galvanized plating layer 2 formed on at least one surface of the cold-rolled steel sheet 1 described above. In the present disclosure, the type of hot-dip galvanized plating layer is not particularly defined, and all types of hot-dip galvanized plating layers commonly used in the art may be applied. However, as an example, the hot-dip galvanized plating layer may include, by weight, 0.5% or less of Al and a remainder of Zn.

It is preferred that a Fe-Al intermetallic compound layer 3 is formed at an interface between the cold-rolled steel sheet 1 and the hot-dip galvanized plating layer 2. The Fe-Al intermetallic compound layer improves plating adhesiveness to help suppress a phenomenon of peeling of the plating layer. The Fe-Al intermetallic compound layer may have an area ratio of 90% or more of the total surface area of the hot-dip galvanized steel sheet. In addition, the Fe-Al intermetallic compound layer includes pores on a scanning electron microscopic image when viewed from the above, and the pores may have an area ratio of 10% or less to the total surface area of the hot-dip galvanized steel sheet. When the area ratio of the Fe-Al intermetallic compound layer is less than 90% or the area ratio of the pores is more than 10%, unplating or plating peeling may occur. The area ratio of the Fe-Al intermetallic compound layer is preferably 95% or more, more preferably 98% or more. The area ratio of the pores is preferably 5% or less, more preferably 2% or less. Though the type of Fe-Al intermetallic compound layer is not particularly limited in the present disclosure, for example, it may be a Fe2Al5 layer.

The Fe-Al intermetallic compound layer may have, as an example, a film form when viewing the steel sheet from the side, thereby suppressing occurrence of unplating.

Directly below the surface of the cold-rolled steel sheet 1, a Fe reduction layer 4 having an average thickness of 50 to 250 nm may be formed. The Fe reduction layer is formed by subjecting the Fe oxide layer formed by an oxidative heat treatment to a reductive heat treatment process again. The Fe oxide layer is widely known to reduce plating adhesiveness. In the present disclosure, the Fe oxide layer is reduced to form the Fe reduction layer, thereby improving plating adhesiveness to suppress a phenomenon of peeling of the plating layer. It is preferred that the Fe reduction layer has an average thickness of 50 to 250 nm. When the average thickness of the Fe reduction layer is less than 50 nm, the effect described above may be sufficiently obtained. When the average thickness of the Fe reduction layer is more than 250 nm, the Fe reduction layer is not completely reduced, so that a Si or Mn oxide may be formed directly below, and thus, plating adhesiveness may be reduced. Meanwhile, in the present disclosure, though the shape of the Fe reduction layer is not particularly limited, as an example, it may have a grain form and exist intermittently.

An internal oxide layer 5 may be formed directly below the Fe reduction layer 4. The internal oxide layer prevents diffusion of Si or Mn present in the cold-rolled steel sheet into a surface layer part of the steel sheet so that a Si or Mn oxide is not formed on the surface layer part, thereby improving platability. The internal oxide layer may have an average thickness of 0.5 to 3 µm. When the average thickness of the internal oxide layer is less than 0.5 µm, it may be difficult to sufficiently obtain the effect described above. When the average thickness of the internal oxide layer is more than 3 µm, fatigue strength may be reduced. Meanwhile, the internal oxide layer may be formed along a crystal grain boundary on a transmission electron microscopic image when viewed from the side.

The hot-dip galvanized steel sheet of the present disclosure provided as described above may secure excellent plated appearance and plating adhesiveness.

Hereinafter, a method of manufacturing a hot-dip galvanized steel sheet according to an embodiment of the present disclosure will be described.

First, a slab satisfying the alloy composition described above is heated. Though the slab heating process is not particularly limited in the present disclosure, common conditions applied in the art may be used. However, as an example, the heating of the slab may be performed at 1100 to 1300°C.

Thereafter, the heated slab is finish hot-rolled to obtain a hot-rolled steel sheet. The finish hot rolling process is not particularly limited in the present disclosure, and common conditions applied in the art may be used. However, as an example, the finish hot rolling may be performed at 800 to 1000°C.

Thereafter, the hot-rolled steel sheet is wound at 600 to 680°C. When a winding temperature is lower than 600°C, the shape becomes inferior. When the winding temperature is higher than 680°C, scale dust may occur. Therefore, it is preferred that the winding temperature is in a range of 600 to 680°C. The lower limit of the winding temperature is more preferably 610°C, and still more preferably 620°C. The upper limit of the winding temperature is more preferably 670°C, and still more preferably 650°C.

Thereafter, the wound hot-rolled steel sheet is cold-rolled to obtain a cold-rolled steel sheet. The cold rolling process is not particularly limited in the present disclosure, and common conditions applied in the art may be used.

Thereafter, the cold-rolled steel sheet is passed through direct fired furnace (DFF) equipment to perform an oxidative heat treatment so that an exit side temperature is 630 to 670°C. The oxidative heat treatment is for forming the internal oxide layer and simultaneously oxidizing Fe present in the surface layer of the cold-rolled steel sheet to form the Fe oxide layer. The Fe oxide layer may perform a diffusion barrier which may suppress diffusion of an element such as Si or Mn into the surface of the steel sheet during the heat treatment process. When the exit side temperature of the DFF equipment is lower than 630°C, the Fe oxide layer is not formed or formed to be very thin, so that the concentration suppression effect of the alloy component to be desired becomes insignificant. When the DFF equipment exit side temperature is higher than 670°C, an excessively formed Fe oxide layer may be detached due to friction with a roll and picked up by the roll to cause defects such as dent on the surface of the steel sheet. Therefore, it is preferred that the DFF equipment exit side temperature is in a range of 630 to 670°C. The lower limit of the DFF equipment exit side temperature is more preferably 635°C, still more preferably 640°C. The upper limit of the DFF equipment exit side temperature is more preferably 665°C, and still more preferably 660°C.

Herein, it is preferred that the DFF equipment includes 4 or more zones and is controlled to satisfy the following Relation 1. The purpose of the following Relation 1 is to allow excessive oxygen remaining after burning all of the supplied fuel to oxidize Fe present in the surface layer of the cold-rolled steel sheet. In addition, the purpose is to control the oxide to be trapped directly below the surface layer of the steel sheet without being concentrated on the surface of the steel sheet. The Fe oxide layer formed by the process is changed into a Fe reduction layer through a reduction process later, and when the Fe oxide layer is all reduced, the oxide present in the surface layer part of the steel sheet is removed to uniformly form the Fe-Al intermetallic compound layer. When the following Relation 1 is not satisfied, the distribution of the Fe-Al intermetallic compound layer becomes non-uniform, and thus, it may be difficult for the Fe-Al intermetallic compound layer to have an area ratio of 70% or more of the total surface area of the steel sheet. In addition, some particles in the Fe-Al intermetallic compound layer may grow coarse. Meanwhile, in the present disclosure, as long as the following Relation 1 is satisfied, the purpose of the present disclosure may be achieved, and thus, the upper limit of the value of Relation 1 is not particularly defined: [Relation 1] 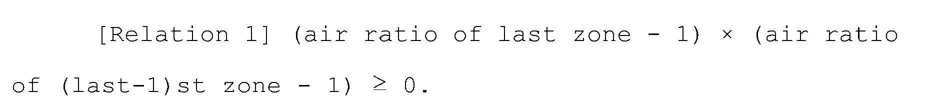 (air ratio of last zone - 1) × (air ratio of (last-1)st zone - 1) ≥ 0.

Meanwhile, the 4 or more zones may have an air ratio of 1.0 or more, respectively, and Fe oxidation may be more easily performed by controlling as such.

Thereafter, the oxidative heat-treated cold-rolled steel sheet is reductive heat-treated in a reducing atmosphere having a dew point temperature of -60°C or higher and lower than -45°C. The reduction heat treatment may be for forming a Fe reduction layer by reducing the Fe oxide layer formed by the oxidative heat treatment. Thus, when the dew point temperature is lower than -60°C, platability may be deteriorated. When the dew point temperature is - 45°C or higher, an oxide amount may be increased due to a selective oxidation transition region to deteriorate platability. Therefore, it is preferred that the dew point temperature is in a range of -60°C or higher and lower than -45°C. It is more preferred that the lower limit of the dew point temperature is -55°C. The upper limit of the dew point temperature is more preferably -46°C, and still more preferably -47°C.

Meanwhile, the reducing atmosphere conditions are not particularly limited in the present disclosure, and common conditions applied in the art may be used. However, as an example, it may be a gas atmosphere including, by volume: 3 to 25% of hydrogen and a remainder of nitrogen.

Thereafter, the reductive heat-treated cold-rolled steel sheet is hot-dip galvanized to obtain a hot-dip galvanized steel sheet. The hot-dip galvanizing process is not particularly limited in the present disclosure, and common conditions applied in the art may be used. The Fe-Al intermetallic compound layer may be formed by the hot-dip galvanizing process. The type of Fe-Al intermetallic compound layer is not particularly limited in the present disclosure. However, as an example, it may be formed by a reaction of Al which is contained in a small amount in a plating bath and Fe eluted from the base steel sheet.

### Mode for Invention

Hereinafter, the present disclosure will be described in detail by the following examples. However, the following examples are only for the purpose of describing the present disclosure in more detail and does not limit the right scope of the present disclosure.

### (Examples)

A slab having the Si and Mn contents shown in the following Table 1 (0.08% of C, 0.02% of P, 0.003% of S, 0.03% of Al, and 0.004% of N) was heated at 1200°C, and then the heated slab was finish hot-rolled at 900°C to obtain a hot-rolled steel sheet. Then, the hot-rolled steel sheet was wound in the conditions shown in the following Table 1, and then the wound hot-rolled steel sheet was cold-rolled to obtain a cold-rolled steel sheet having a thickness of 2.0 mm. Then, the cold-rolled steel sheet was passed through direct fired furnace (DFF) equipment having 4 zones (line speed: 60 mpm) in the conditions shown in the following Table 2 to perform an oxidative heat treatment. Then, the oxidative heat-treated cold-rolled steel sheet was reductive heat-treated in the reduction atmosphere (5 vol% of hydrogen and a remainder of nitrogen) under the conditions shown in the following Table 1, and the reductive heat-treated cold-rolled steel sheet was dipped into a hot-dip galvanizing bath (0.2% of Al and a remainder of Zn) to manufacture a hot-dip galvanized steel sheet.

For the hot-dip galvanized steel sheet manufactured as such, whether the Fe-Al intermetallic compound layer was formed, whether the Fe reduction layer was formed, the average thickness of the Fe reduction layer, whether the internal oxide layer was formed, the average thickness of the internal oxide layer, and the area fraction of the pores were measured, and the results are shown in the following Table 2.

Whether the Fe-Al intermetallic compound layer was formed and the area fraction of the pores were determined by photographing the surface of the Fe-Al intermetallic compound layer using a scanning electron microscopy, measuring random 10 points with an image analyzer, and calculating average values.

Whether the Fe reduction layer was formed and the average thickness thereof, and whether the internal oxide layer was formed and the average thickness thereof were determined by measuring random 10 points of the side surface of the hot-dip plated steel sheet using a transmission electron microscopy and then calculating average values.

In addition, platability of the hot-dip galvanized steel sheet was measured, and the results are shown in the following Table 2.

Whether it was unplated as one of the evaluations of the platability was determined by visually checking whether there was an unplated portion by observing the surface of the hot-dip galvanized steel sheet.

In order to evaluate whether the plating layer was peeled off as one of the evaluations of the platability, a specimen having a size of 30 mm×80 mm from the hot-dip galvanized steel sheet was collected, a structural adhesive was applied on the specimen, curing was performed for 20 minutes in an oven at 170°C, and then the specimen was clamped in a bending jig to perform 90° bending. Then, it was visually checked whether the plating layer was attached to the surface having the structural adhesive applied thereon, thereby determining whether the plating layer was peeled off.

**[Table 1]**

| Classification | Alloy composition (wt%) | | Winding temperature (°C) | DFF exit side temperature (°C) | Whether Relation 1 was satisfied |
|---|---|---|---|---|---|
| | Si | Mn | | | |
| Inventive Example 1 | 0.2 | 1.69 | 608 | 651 | Satisfied |
| Inventive Example 2 | 0.1 | 1.79 | 605 | 650 | Satisfied |
| Inventive Example 3 | 0.3 | 1.59 | 623 | 665 | Satisfied |
| Inventive Example 4 | 0.25 | 1.64 | 676 | 660 | Satisfied |
| Comparative Example 1 | 1.4 | 0.49 | 585 | 655 | Unsatisfied |
| Comparative Example 2 | 0.5 | 1.39 | 574 | 650 | Unsatisfied |
| Comparative Example 3 | 0.7 | 1.19 | 637 | 677 | Unsatisfied |
| Comparative Example 4 | 0.3 | 1.59 | 646 | 700 | Satisfied |
| Comparative Example 5 | 0.2 | 1.69 | 656 | 625 | Unsatisfied |
| [Relation 1] (air ratio of last zone - 1) × (air ratio of (last-1)st zone - 1) ≥ 0 | | | | | |

**[Table 2]**

| Classification | Whether Fe-Al intermetallic compound layer was formed | Fe reduction layer | | Internal oxide layer | | Pore area fraction (% by area) | Platability | |
|---|---|---|---|---|---|---|---|---|
| | | Formed or not formed | Average thickness (nm) | Formed or not formed | Average thickness (µm) | | Plated or unplated | Whether plating layer was peeled off |
| Inventive Example 1 | Formed | Formed | 130 | Formed | 2.0 | 2 | Plated | Not peeled off |
| Inventive Example 2 | Formed | Formed | 160 | Formed | 2.4 | 1 | Plated | Not peeled off |
| Inventive Example 3 | Formed | Formed | 190 | Formed | 2.8 | 2 | Plated | Not peeled off |
| Inventive Example 4 | Formed | Formed | 100 | Formed | 1.2 | 4 | Plated | Not peeled off |
| Comparative Example 1 | Formed | Not formed | 0 | Not formed | 0 | 0 | Unplated | Peeled off |
| Comparative Example 2 | Formed | Not formed | 0 | Not formed | 0 | 0 | Unplated | Not peeled off |
| Comparative Example 3 | Formed | Not formed | 0 | Formed | 0.1 | 0 | Unplated | Not peeled off |
| Comparative Example 4 | Formed | Formed | 400 | Formed | 4.3 | 16 | Unplated | Peeled off |
| Comparative Example 5 | Formed | Not formed | 0 | Formed | 0.3 | 0 | Unplated | Not peeled off |

As seen from Tables 1 and 2, it was found that Inventive Examples 1 to 4 satisfying the conditions suggested in the present disclosure had good platability.

However, in Comparative Example 1, since the Si and Mn contents in the cold-rolled steel sheet, and the winding temperature, and Relation 1 were not satisfied, it was found that the Fe reduction layer and the internal oxide layer were not formed, and pores did not occur to cause unplating and plating layer peeling.

In Comparative Example 2, since the winding temperature and Relation 1 were not satisfied, it was found that the Fe reduction layer and the internal oxide layer were not formed, and pores did not occur to cause unplating.

In Comparative Example 3, since the Si content in the cold-rolled steel sheet, the DFF exit side temperature, and Relation 1 were not satisfied, it was found that the Fe reduction layer was not formed, the internal oxide layer was not sufficiently formed, and pores did not occur to cause unplating.

In Comparative Example 4, since the DFF exit side temperature was not satisfied, it was found that the Fe reduction layer and the internal oxide layer were excessively formed, and pores also excessively occurred to cause unplating and plating peeling.

In Comparative Example 5, since the DFF exit side temperature, and Relation 1 were not satisfied, it was found that the Fe reduction layer was not formed, the internal oxide layer was not sufficiently formed, and pores did not occur to cause unplating.

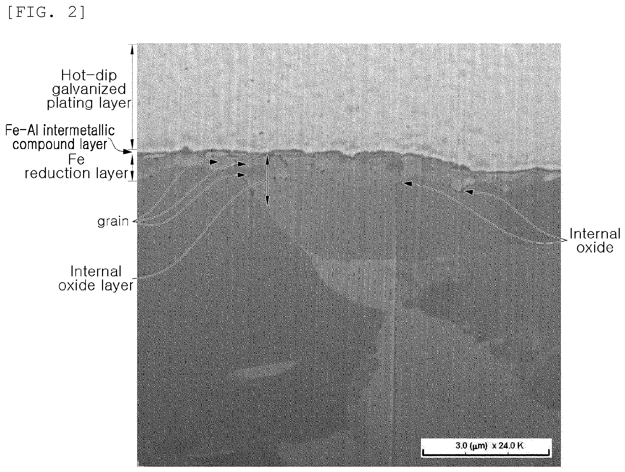

FIG. 2 is a photograph in which Inventive Example 1 was observed with TEM. As seen from FIG. 2, in Inventive Example 1, it was found that the Fe-Al intermetallic compound layer, the Fe reduction layer, and the internal oxide layer were sequentially formed, and the Fe reduction layer had an intermittent grain form.

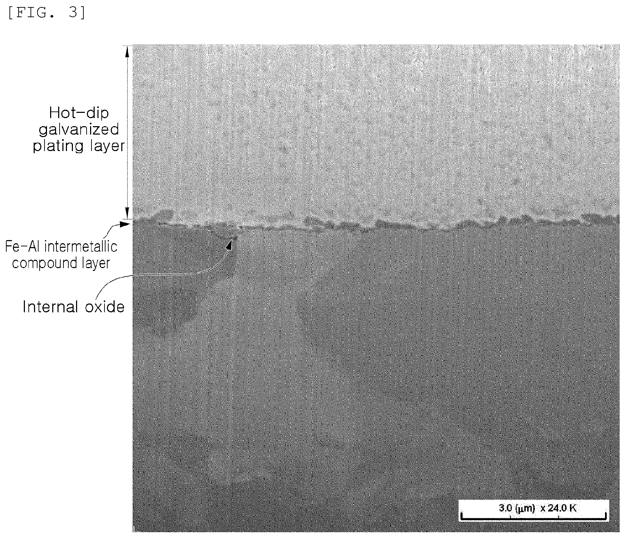

FIG. 3 is a photograph in which Comparative Example 1 was observed with TEM. As seen from FIG. 3, in Comparative Example 1, it was confirmed that the Fe-Al intermetallic compound layer was non-uniformly formed, and the Fe reduction layer was not formed.

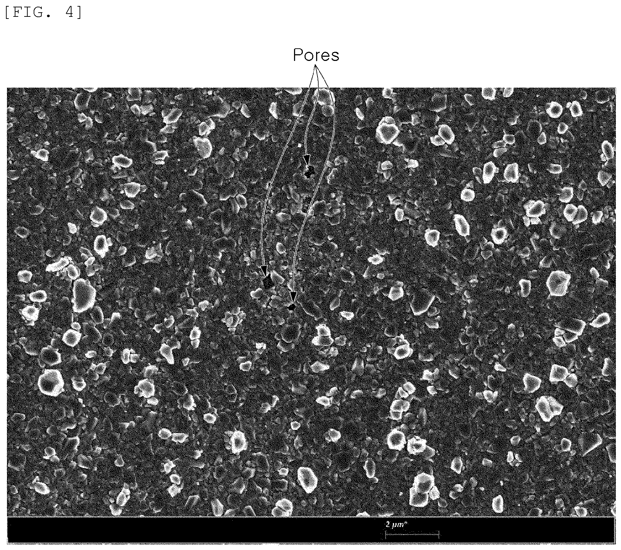

FIG. 4 is a photograph in which the surface of the Fe-Al intermetallic compound layer of Inventive Example 1 was observed with SEM. As seen from FIG. 4, in Inventive Example 1, it was found that the Fe-Al intermetallic compound layer was densely and uniformly formed, and pores also existed due to volume shrinkage during a Fe oxide layer reduction process.

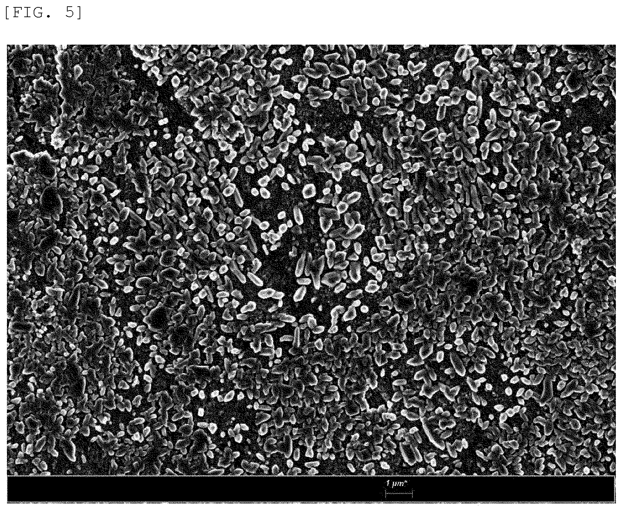

However, FIG. 5 is a photograph in which the surface of the Fe-Al intermetallic compound layer of Comparative Example 1 was observed with SEM. As seen from FIG. 5, in Comparative Example 1, it was found that crystals of the Fe-Al intermetallic compound layer were distributed in a particle form and were not-densely formed.

### [Description of Reference Characters]

- 1:: Cold-rolled steel sheet
- 2:: Hot-dip galvanized plating layer
- 3:: Fe-Al intermetallic compound layer
- 4:: Fe reduction layer
- 5:: Internal oxide layer
- 10:: Hot-dip galvanized steel sheet

## Claims

1. A hot-dip galvanized steel sheet comprising:
a cold-rolled steel sheet including, by weight: 0.10% or more and less than 0.50% of Si, 1.0 to 3.0% of Mn, a remainder of Fe, and other unavoidable impurities; and
a hot-dip galvanized plating layer formed on at least one surface of the cold-rolled steel sheet,
wherein a Fe-Al intermetallic compound layer is formed at an interface between the cold-rolled steel sheet and the hot-dip galvanized plating layer,
a Fe reduction layer having an average thickness of 50 to 250 nm is formed directly below a surface of the cold-rolled steel sheet, and
an internal oxide layer is formed directly below the Fe reduction layer.

2. A hot-dip galvanized steel sheet comprising:
a cold-rolled steel sheet including, by weight: 0.10% or more and less than 0.50% of Si, 1.0 to 3.0% of Mn, a remainder of Fe, and other unavoidable impurities; and
a hot-dip galvanized plating layer formed on at least one surface of the cold-rolled steel sheet,
wherein a Fe-Al intermetallic compound layer including pores is formed at an interface between the cold-rolled steel sheet and the hot-dip galvanized plating layer,
a Fe reduction layer having an average thickness of 50 to 250 nm is formed directly below a surface of the cold-rolled steel sheet, and
the pores have an area ratio of 10% or less of a total surface area of the hot-dip galvanized steel sheet.

3. The hot-dip galvanized steel sheet of claim 1 or 2, wherein the cold-rolled steel sheet further includes, by weight: one or more of 0.050 to 0.30% of C, 0.10% or less (excluding 0%) of P, 0.010% or less (excluding 0%) of S, 0.010 to 0.10% of Al, and 0.0080% or less (excluding 0%) of N.

4. The hot-dip galvanized steel sheet of claim 1 or 2, wherein the Fe-Al intermetallic compound layer has an area ratio of 90% or more of the total surface area of the hot-dip galvanized steel sheet.

5. The hot-dip galvanized steel sheet of claim 1 or 2, wherein the Fe reduction layer has a grain form.

6. The hot-dip galvanized steel sheet of claim 1 or 2, wherein the internal oxide layer has an average thickness of 0.5 to 3 µm.

7. A method of manufacturing a hot-dip galvanized steel sheet comprising:
heating a slab including, by weight: 0.10% or more and less than 0.50% of Si, 1.0 to 3.0% of Mn, a remainder of Fe, and other unavoidable impurities;
finish hot rolling the heated slab to obtain a hot-rolled steel sheet;
winding the hot-rolled steel sheet at 600 to 680°C;
cold rolling the wound hot-rolled steel sheet to obtain a cold-rolled steel sheet;
passing the cold-rolled steel sheet through direct fired furnace (DFF) equipment to perform an oxidative heat treatment so that an exit side temperature is 630 to 670°C;
reductive heat-treating the oxidative heat-treated cold-rolled steel sheet in a reducing atmosphere having a dew point temperature of -60°C or higher and lower than - 45°C; and
hot-dip galvanizing the reductive heat-treated cold-rolled steel sheet to obtain a hot-dip galvanized steel sheet,
wherein the DFF equipment includes 4 or more zones and is controlled to satisfy the following Relation 1: [Relation 1] 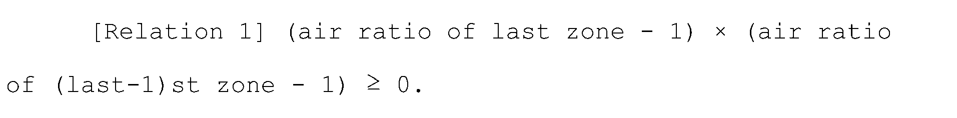 (air ratio of last zone - 1) × (air ratio of (last-1)st zone - 1) ≥ 0.

8. The method of manufacturing a hot-dip galvanized steel sheet of claim 7, wherein the slab further includes, by weight: one or more of 0.050 to 0.30% of C, 0.10% or less (excluding 0%) of P, 0.010% or less (excluding 0%) of S, 0.010 to 0.10% of Al, and 0.0080% or less (excluding 0%) of N.

9. The method of manufacturing a hot-dip galvanized steel sheet of claim 7, wherein the heating of a slab is performed at 1100 to 1300°C.

10. The method of manufacturing a hot-dip galvanized steel sheet of claim 7, wherein the finish hot rolling is performed at 800 to 1000°C.

11. The method of manufacturing a hot-dip galvanized steel sheet of claim 7, wherein the reducing atmosphere includes, by volume: 3 to 25% of hydrogen and a remainder of nitrogen.

12. The method of manufacturing a hot-dip galvanized steel sheet of claim 7, wherein the 4 or more zones have an air ratio of 1.0 or more, respectively.
